(19) **Europäisches Patentamt**
**European Patent Office**
**Office européen des brevets**

(11) **EP 3 372 625 A1**

(12) **EUROPÄISCHE PATENTANMELDUNG**

(43) Veröffentlichungstag:
**12.09.2018 Patentblatt 2018/37**

(51) Int Cl.:
**C08G 18/48** *(2006.01)*  **B29C 44/10** *(2006.01)*
**C08G 18/66** *(2006.01)*  **C08G 18/76** *(2006.01)*
**C08J 9/12** *(2006.01)*  **C08J 9/14** *(2006.01)*
**C08G 18/32** *(2006.01)*

(21) Anmeldenummer: **17170955.3**

(22) Anmeldetag: **14.05.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **07.03.2017 EP 17159555**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **POLYURETHANSCHAUM UND VERFAHREN ZU SEINER HERSTELLUNG**

(57) Die vorliegende Erfindung betrifft ein Verfahren zur Herstellung eines harten offenzelligen Polyurethanschaums. Die Schaumstoffe können neben Urethangruppen (PUR) auch Isocyanuratgruppen (PIR) enthalten.

EP 3 372 625 A1

**Beschreibung**

Die vorliegende Erfindung betrifft ein Verfahren zur Herstellung eines harten offenzelligen Polyurethanschaums. Die Schaumstoffe können neben Urethangruppen (PUR) auch Isocyanuratgruppen (PIR) enthalten. In dieser Anmeldung sind mit der Bezeichnung PUR/PIR - Hartschaum bzw. PUR/PIR-Hartschaumstoff sowohl Hartschäume, welche im Wesentlichen Urethangruppen aufweisen, als auch Hartschäume enthaltend sowohl Urethan- als auch Isocyanuratgruppen gemeint, falls nicht anders angegeben.

PUR/PIR-Hartschäume sind seit langem bekannt. Ein wesentliches Einsatzgebiet ist die Temperaturisolierung. Dabei gewinnt die Anwendung von Vakuumisolationspaneelen (VIP) enthaltend PUR/PIR-Hartschäume zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist ein hoher Anteil an offenen Zellen günstig, um den Schaum gut evakuieren zu können.

Die Herstellung von offenzelligen PUR/PIR-Hartschäumen ist ebenfalls prinzipiell bekannt. Im Allgemeinen werden der Reaktionsmischung bestimmte, zellöffnende Substanzen zugegeben, um eine Öffnung der Zellen beim Schaumprozess zu bewirken.

So beschreibt US-A 5 350 777 die Verwendung von Erdalkalisalzen langkettiger Fettsäuren als Zellöffner.

EP-A 498 628 A offenbart die Herstellung offenzelliger Hartschäume durch die Wirkung eines thermisch aktivierbaren Treibmittels. Dieses Verfahren weist den Nachteil auf, dass die Schaumzellen lediglich dort geöffnet werden, wo eine Mindesttemperatur im Verlauf des Schaumprozesses überschritten wird, so dass die erhaltenen Schäume über das mit dem Schaum ausgefüllte Volumen hinweg keine gleichmäßig hohe Offenzelligkeit aufweisen.

In DE-A 43 03 809 wird ein Verfahren zur Herstellung von Hartschaumstoffen mit erhöhter Offenzelligkeit beschrieben, bei dem die zellöffnende Wirkung eines flüssigen Polyolefinzusatzes genutzt wird. Dieses Verfahren besitzt den Nachteil einer engen Anwendungsbreite und weiterhin, dass bei einer nicht exakten Dosierung des Polyolefinzusatzes schnell Zellvergröberung eintritt.

In US-A 5 250 579 und US-A 5 312 846 wird die zellöffnende Wirkung von Substanzen mit einer Oberflächenspannung von weniger als 23 mJ/m$^2$ offenbart. Diese Substanzen weisen jedoch den Nachteil auf, dass sie organisch gebundenes Halogen enthalten.

In US-A 5 889 067 wird ein Verfahren zur Herstellung eines offenzelligen Polyurethanhartschaums beschrieben, welches die Herstellung des Polyurethan-Hartschaumes aus Polyol mit einem flüchtigen Treibmittel ausgewählt aus der Gruppe bestehend aus Kohlenwasserstoffen, Hydrofluoralkanen, Perfluoralkanen, Mischungen dieser Treibmittel untereinander oder mit Wasser, umfasst, unter Zugabe eines einwertigen Fettalkohols welcher eine gute Löslichkeit in den Kohlenwasserstoffen besitzt und als Zellöffnungsmittel dient, sowie eines Schaumstabilisators, der eine sehr kleine Zelle in Gegenwart eines Isocyanat-Trimer-Katalysators und eines organischen Isocyanats bildet. Der sich daraus ergebende offenzellige Polyurethanhartschaum hat eine Zellgröße von weniger als etwa 95 μm und ist z.B. für die die Verwendung als Kernmaterial in einem Vakuumisolationspaneel geeignet.

EP 905 159 A sowie EP 905 158 A offenbaren Verfahren zur Herstellung von offenzelligen Polyurethan-Hartschaumstoffen, bei denen als Treibmittel bevorzugt Wasser in Kombination mit Kohlenwasserstoffen oder Fluorkohlenwasserstoffen eingesetzt wird. Die Polyolformulierungen sollen 0,1 - 80 Gew.-% an Polyesteralkoholen enthalten, bei denen es sich bevorzugt um Umsetzungsprodukte der Ricinolsäure und/oder des Rizinusöls und/oder der Tallölfettsäure mit mehrfunktionellen Alkoholen handelt. Diese Komponenten sollen als Emulgierhilfsmittel für nicht halogenhaltige Treibmittel wirken. Mit den beanspruchten Polyolen werden in den Beispielen sowohl offenzellige als auch geschlossenzellige Schäume hergestellt, wobei die Offenzelligkeit an die Anwesenheit von als Zellöffnern bekannten Additiven geknüpft ist. Die Zellen der erhaltenen Schaumstoffe werden zwar als feinzellig beschrieben, jedoch bedeutet "sehr feinzellig" gemäß Legende einen Zellgrößenbereich von 180 - 250 μm. Über die Homogenität der Zellgrößenverteilung wird zudem keine Aussage gemacht.

EP 2 072 548 A beschreibt ein Verfahren zur Herstellung von offenzelligen PUR/PIR-Hartschaumstoffen mit einem Isocyanatindex im Bereich zwischen 150-400, durch Umsetzung von Polyisocyanaten mit Polyolen mit einer Funktionalität im Bereich von 2,5 bis 5,5 und eine Hydroxylzahl im Bereich von 200-400 mg KOH/g, in Gegenwart einer Treibmittelmischung aus Wasser und mindestens einem physikalischen Treibmittel ist. Die Offenzelligkeit der Schäume in den Beispielen wird jedoch vor allem mit hohen Anteilen an zellöffnenden Substanzen erhalten.

Bei der Herstellung von PUR/PIR-Hartschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlenstoffdioxid, das auch als Treibmittel wirkt. Es ist auch bekannt, $CO_2$ als Treibmittel der Polyolkomponente oder der Reaktionsmischung zuzusetzen.

Auch für die Verwendung von überkritischem $CO_2$ in Kombination mit bestimmten Verfahrensschritten und Komponenten wurde ein Einfluss auf Feinzelligkeit und Offenzelligkeit gefunden:

Die schlagartige Entspannung $CO_2$-haltiger Reaktionsmischungen wird in WO 2001/98389 A1 beschrieben. Diese Patentanmeldung betrifft ein Verfahren zur Herstellung von Polyurethan-Blockschaum, wobei eine Kohlenstoffdioxid enthaltende Polyurethan-Reaktivmischung plötzlich von einem Druck oberhalb des Gleichgewichtlösungsdruckes des Kohlenstoffdioxids auf Normaldruck entspannt wird. Die flüssige Polyurethan-Reaktivmischung wird unter Freisetzung von gelöstem Kohlenstoffdioxid aufgeschäumt, die aufgeschäumte Mischung wird auf ein Substrat aufgebracht und anschließend zum Blockschaum ausgehärtet. Das Kohlenstoffdioxid wird zunächst bei einem wesentlich oberhalb des Gleichgewichtlösungsdruckes liegenden Druck in der Reaktivmischung oder mindestens einer der Komponenten Polyol und Isocyanat vollständig gelöst. Anschließend wird der Druck auf einen Druck nahe des Gleichgewichtlösungsdruckes herabgesetzt, wobei zwischenzeitlich der Gleichgewichtlösungsdruck unter Freisetzung geringer Mengen des Kohlenstoffdioxid unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlenstoffdioxid wieder vollständig aufgelöst wird. Allerdings finden sich hier keine Hinweise auf nanozelluläre Schäume oder überkritische Bedingungen für das Treibmittel.

WO 2011/054868 A und WO 2011/054873 A offenbaren Herstellungsverfahren für feinzellige, Urethangruppen-haltige Schaumstoffe unter Verwendung von $CO_2$ als überkritischem Treibmittel. Entscheidend für den Erfolg des Verfahrens ist in beiden Fällen die Herstellung einer Mikroemulsion aus Polyolphase und überkritischem $CO_2$. Diese soll durch die Verwendung geeigneter Tensidkomponenten eingestellt werden. Es werden jedoch keine Angaben gemacht, wie mit diesem Verfahren Schäume mit überwiegend offenen Zellen hergestellt werden.

WO 2015/109488 A beschreibt ebenfalls ein Herstellungsverfahren von Urethangruppen-haltigen Schaumstoffen unter Verwendung von $CO_2$ als überkritischem Treibmittel. Bei dem Herstellverfahren handelt es sich um ein mehrstufiges Verfahren, wobei die Polyolkomponente zunächst mit $CO_2$ unter überkritischen Bedingungen gesättigt werden muss und anschließend auf die Reaktionsmischung mindestens Drücke von 100 bar einwirken müssen. Die hergestellten Schäume sollen kleine Zellgrößen und eine hohe Porosität aufweisen. Schäume mit einer hohen Offenzelligkeit werden jedoch nur bei Einsatz von Propylenoxid-basierten Polyethern und bei Verwendung von zwei ganz bestimmten zellöffnenden Tensiden in einem bestimmten Verhältnis gefunden. Das Verfahren liefert Schäume mit Dichten >> 100 kg/m$^3$. Die gesamte Dauer für das mehrstufige Verfahren (Sättigen, Reagieren, Aushärten) im Reaktor beträgt >> 1 h, während der überkritische Bedingungen eingehalten werden müssen.

Ausgehend von dem vorliegenden Stand der Technik besteht weiterhin die Aufgabe, eine Polyolformulierung für ein Reaktionsgemisch zur Verfügung zu stellen, mit dem sich ein sehr feinzelliger, offenzelliger Urethangruppen enthaltender Hartschaum (PUR/PIR-Hartschaum) in einem einfachen Verfahren herstellen lässt. Außerdem soll ein Verfahren für die Herstellung von sehr feinzelligen, Urethangruppen enthaltenden Hartschäumen mit einer hohen Offenzelligkeit zur Verfügung gestellt werden, welches die Nachteile des Stands der Technik überwindet. Eine möglichst hohe Offenzelligkeit kombiniert mit einer kleinen Zellgröße ist für bestimmte Anwendungen von Interesse, bei denen diese Schaumeigenschaft die Möglichkeit eröffnet, durch Anlegen von Unterdruck die Wärmeleitfähigkeit des Schaumes zu reduzieren.

Insbesondere sollen eine Polyolformulierung und ein Verfahren zur Verfügung gestellt werden, mit dem sich Polyurethan-Hartschäume, die eine Rohdichte von 50 - 300 kg/m$^3$ und eine Offenzelligkeit von > 90% aufweisen, und bei denen die Zellen einen durchschnittlichen Durchmesser von < 180 $\mu$m haben, herstellen lassen.

Gegenstand der Erfindung ist eine Polyolformulierung P) geeignet zur Herstellung von offenzelligen PUR/PIR-Hartschäumen enthaltend

- eine Isocyanat-reaktive Komponente A) umfassend
  mindestens eine Polyolkomponente A1) mit einer Funktionalität f von > 2,5, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,

- eine Katalysatorkomponente D) mindestens enthaltend eine katalytisch aktive Verbindung D1), welche über Zerewitinoff-aktive Wasserstoffe verfügt,

- Hilfs- und Zusatzstoffe E) umfassend keine oder mindestens eine zellöffnende Verbindung,

und

- eine Treibmittelkomponente C),

dadurch gekennzeichnet, dass der Anteil aller in der isocyanatreaktiven Komponente A) vorhandenen primären OH - Funktionen an der Gesamtzahl der endständigen OH - Funktionen in der Komponente A) mindestens 30 % beträgt, und dass die Treibmittelkomponente C) Ameisensäure enthält.

Gegenstand der Erfindung ist auch das mit der erfindungsgemäßen Polyolformulierung P) hergestellte schaumbildende Reaktionsgemisch R), weiterhin umfassend mindestens eine Polyisocyanatkomponente B).

Gegenstand der Erfindung ist weiterhin ein Verfahren zur Herstellung PUR/PIR-Hartschaumstoffen, umfassend die Schritte

i) Herstellen des erfindungsgemäßen schaumbildenden Reaktionsgemisches R) enthaltend die Polyolformulierung P) und mindestens eine Polyisocyanatkomponente B),

ii) Einbringen des schaumbildenden Reaktionsgemisches R) in eine Form,

iii) Aufschäumen lassen des Reaktionsgemisches R) und

iv) Entformen des PUR/PIR-Hartschaums.

In dieser Anmeldung verwendete Bezeichnungen haben die folgende Bedeutung:

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der Polyol-Komponente A1) ist somit beispielsweise die zahlenmittlere Funktionalität der Mischung aus den in der Komponente A1 enthaltenden Polyolen in Bezug auf alle enthaltenen Isocyanat-reaktiven Funktionen gemeint.

Mit "Molgewicht" oder "Molmasse" bzw. "$M_n$" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Die Isocyanat-reaktive Komponente A) enthält mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen.

Der Anteil an primären OH - Funktionen an der Gesamtzahl der endständigen OH - Funktionen aller in der Komponente A) eingesetzten Polyole beträgt mindestens 30 %, bevorzugt mindestens 35 %, insbesondere bevorzugt mindestens 38 %.

Die Polyolkomponente A1) zeichnet sich weiterhin dadurch aus, dass sie eine Funktionalität f von > 2,5, bevorzugt $\geq$ 2,6 - $\leq$ 6,5 und besonders bevorzugt $\geq$ 2,8 - $\leq$ 6,1 aufweist. Mit Polyolformulierungen, in denen die Polyolkomponente A1) eine Funktionalität in diesen Bereichen aufweist, wird beim Einspritzen ein optimaler Viskositätsanstieg bis zur Entspannung des Gegendrucks gefunden und lassen sich die Schäume schneller entformen.

Die Polyolkomponente A1) weist bevorzugt eine Hydroxylzahl von 280 - 600 mg KOH/g, besonders bevorzugt von 300 - 580 mg KOH/g und insbesondere bevorzugt von 350 - 540 mg KOH/g auf. -Dies wirkt sich besonders günstig auf die mechanischen Eigenschaften der Schäume aus.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Bei den erfindungsgemäß verwendbaren Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare,

Hydroxylgruppen aufweisende Ester derartiger Polyole mit Dicarbonsäuren sowie Oligoether derartiger Polyole.

Bevorzugt enthält die Isocyanat-reaktive Komponente A) bezogen auf ihr Gesamtgewicht mindestens 50 Gew.-%, bevorzugt mindestens 60 Gew.-%, insbesondere bevorzugt mindestens 70 Gew.-% Polyetherpolyol. In einer bevorzugten Ausführungsform besteht die Komponente A1) zu 100 Gew.-% aus Polyetherpolyol. Diese bevorzugten Ausführungsformen zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten $M_n$ von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von ≥ 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen $M_n$ von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit $CO_2$ erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Polyetherpolyole, Polyethercarbonatpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 50 mol-%. Der Einsatz von 100 mol-% Ethylenoxid ist ebenfalls eine bevorzugte Ausführungsform.

Weiterhin können in der Isocyanat-reaktiven Komponente A) niedermolekulare Isocyanat-reaktive Verbindungen A2) enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol, Glycerin. Sofern zur Herstellung der Polyurethanhartschaumstoffe solche niedermolekularen Isocyanat-reaktiven Verbindungen Anwendung finden, z.B. in der Funktion als Kettenverlängerungsmittel und/oder Vernetzungsmittel, und diese nicht auch unter die Definition der Komponente A1) fallen, kommen diese zweckmäßigerweise in einer Menge von bis zu 5 Gew.-%, bezogen auf das Gesamtgewicht der Komponente A) zum Einsatz.

Neben den oben beschriebenen Polyolen und Isocyanat-reaktiven Verbindungen können in der Komponente A) weitere Isocyanat-reaktive Verbindungen A3) enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Eine bevorzugte Isocyanat-reaktive Komponente A) besteht zu mindestens 65 Gew.-%, insbesondere mindestens 80 Gew.-% und ganz besonders bevorzugt zu mehr als 90 Gew.-% aus der Polyolkomponente A1), die eine Hydroxylzahl zwischen 280 bis 600 mg KOH/g und eine Funktionalität von ≥ 2,8 bis ≤ 6,0 aufweist, und der Anteil an primären OH-Funktionen in der Komponente A) beträgt mindestens 35 % (bezogen auf alle endständigen OH-Funktionen in der Komponente A).

Die Polyolformulierung P) enthält optional Hilfs- und Zusatzstoffe E). Die Hilfs- und Zusatzstoffe können keine, eine oder mehrere zellöffnende Verbindungen umfassen.

Zellöffnende Verbindungen sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern. Bevorzugt sind Zellöffner auf Basis Polybutadien. Bevorzugt werden die zellöffnenden Komponenten in Mengen von max. 1 Gew.-%, bezogen auf die Isocyanat-reaktive Komponente A), eingesetzt. Besonders bevorzugt ist der Einsatz von 0,1 -1,0 Gew.-% eines organischen Polymers auf Basis Polybutadien, ganz besonders bevorzugt 0,25 - 0,75 Gew.-%, jeweils bezogen auf das Gesamtgewicht der Komponente A).

In einer alternativen Ausführungsform enthält die Reaktionsmischung keine zellöffnenden Verbindungen, insbesondere keine auf Basis von Polybutadien.

Weitere Hilfs- und Zusatzstoffe E), die in dem erfindungsgemäßen Verfahren eingesetzt werden können, sind die aus dem Stand der Technik und dem Fachmann bekannten und üblichen Hilfs- und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Einige der bekannten zellöffnenden Verbindungen, z.B. die Silikone, können auch gleichzeitig Aufgaben als oberflächenaktive Substanzen, Stabilisatoren oder Zellregler übernehmen. In diesem Fall können von diesen Komponenten auch höhere als die oben für die zellöffnenden Verbindungen genannten, bevorzugten Mengen eingesetzt werden.

Es werden häufig Polyether-Polydimethylsiloxan-Copolymere verwendet, vorzugsweise ein Polyethylenoxid-Polyether mit Oligodimethylsiloxan-Endgruppen, wobei die Zahl der Dimethylsiloxan-Einheiten vorzugsweise ≤ 5 ist.

Als Stabilisatoren können auch gesättigte und ungesättigte Kohlenwasserstoffe wie Paraffine, Polybutadiene, Fettalkohole sowie Ester, z.B. Ester von Carbonsäuren, eingesetzt werden.

Die Komponente A) enthält bevorzugt insgesamt maximal 3 Gew.-% Silikone und Polybutadiene.

Weiterhin können als Stabilisatoren Tenside eingesetzt werden, beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Bevorzugt enthält die Komponente A) insgesamt maximal 5 Gew.-% Tenside, insbesondere bevorzugt maximal 3 Gew.-%, mehr bevorzugt weniger als 2 Gew.-% und insbesondere bevorzugt maximal 1,6 Gew.-% an Tensiden, bezogen auf das Gesamtgewicht der Komponente A).

Für die Herstellung des PUR/PIR-Hartschaums werden Katalysatoren D) eingesetzt. Als Katalysatoren D) werden üblicherweise Verbindungen verwendet, welche die Reaktion der Hydroxylgruppen bzw. isocyanatreaktiven Gruppen enthaltenden Verbindungen der Komponenten mit den Isocyanatgruppen der Komponente B beschleunigen.

Die Katalysatoren D) enthalten D1) mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind Bis-dimethylaminopropylharnstoff, Bis(N,N-Dimethylaminoethoxyethyl)carbamat, Di-methylamino-propylharnstoff, N,N,N-Trimethyl-N-hydroxyethyl-bis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di¬methyaminopropyl-N,N-dimethylpropan-1,3-diamin, Dimethyl-2-(2-amino¬ethoxyethanol) und (1,3-Bis(dimethylamino)-propan-2-ol), N,N-Bis-(3-dimethylamino-propyl)-N-isopropanolamin,

Bis-(dimethylaminopropyl)-2-hydroxyethyl-amin, N,N,N-Trimethyl-N-(3aminopropyl)-bis(aminoethylether), 3-Dimethylaminoisopropyl-diisopropanolamin oder Mischungen davon.

In einer bevorzugten Ausführungsform werden die Katalysatoren D1) in einer Menge von ≥ 0,01 bis < 2 Gew.-%, bezogen auf das Gesamtgewicht der Komponente A) eingesetzt.

Daneben können eine oder mehrere weitere Katalysatorverbindung D2), insbesondere die für die PUR/PIR -Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexa¬hydro¬triazin, Tetramethylammoniumhydroxid, Natriumacetat, Natriumoctoat, Kaliumacetat, Kaliumoctoat, Natriumhydroxid.

Die Katalysatoren D) werden im Allgemeinen in einer Menge von 0,001 bis 5 Gew.-%, insbesondere von 0,05 bis 2,5 Gew.-% bezogen auf das Gewicht der Komponente A, eingesetzt. Besonders bevorzugt enthalten die Katalysatoren D) sowohl einbaubare Katalysatoren D1) und nicht einbaubare Katalysatoren D2). Insbesondere ist es bevorzugt, dass einbaubare Aminverbindungen und katalytisch aktive Salze in Kombination eingesetzt werden.

Die Katalysatoren D1) und D2) werden bevorzugt in einem molaren Verhältnis D1/D2 von 0,1 bis 16,3 eingesetzt, besonders bevorzugt von 0,3 bis 10 und ganz besonders bevorzugt von 0,8 bis 6,0. Die Katalysatorkomponente D) enthält bevorzugt als katalytisch aktive Verbindung D1) eine in das Polyurethan einbaubare Aminverbindung und weiterhin die nicht katalytisch aktive Verbindung D2), bei welcher es sich um ein nicht in das Polyurethan einbaubares, katalytisch aktives Salz handelt, und das molare Verhältnis von D1/D2 beträgt 0,1 bis 16,3, besonders bevorzugt von 0,3 bis 10 und ganz besonders bevorzugt von 0,8 bis 6,0. In einer besonders bevorzugten Ausführungsform werden 3-(Dimethylamino)Propylharnstoff und Kaliumacetat in einem molaren Verhältnis D1/D2 von 0,1 bis 6,0, besonders bevorzugt von 0,3 bis 10 und ganz besonders bevorzugt von 0,8 bis 6,0, eingesetzt. Die bevorzugten Katalysatorverhältnisse bzw. Katalysatoren wirken sich besonders günstig auf einen definierten Viskositätsaufbau aus.

In der Herstellung des PUR/PIR-Hartschaums wird eine Treibmittelkomponente C) verwendet. Bei Treibmitteln kann man zwischen chemischen und physikalischen Treibmitteln unterscheiden.

Als Treibmittel C) wird mindestens Ameisensäure verwendet, welche zu der Gruppe der chemischen Treibmittel gehört. Bevorzugt wird die Ameisensäure in einer Menge von 0,5 - 6 Gew.-%, besonders bevorzugt von 0,5 bis 4 Gew.-%, bezogen auf die Gesamtmenge an Verbindungen mit gegenüber Isocyanatgruppen reaktiven Wasserstoffatomen in dem schaumbildenden Reaktionsgemisch R), eingesetzt. Die Ameisensäure wird oft gemeinsam in einer Mischung mit Wasser eingesetzt. Wird eine Ameisensäure/Wasser - Mischung eingesetzt, ist ein Verhältnis von Ameisensäure : Wasser > 0,5 besonders bevorzugt. Neben der Ameisensäure und gegebenenfalls Wasser können auch noch andere chemische Treibmittel zugegeben werden.

Die Treibmittelkomponente C) kann auch weiterhin physikalische Treibmittel enthalten. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren.

Bevorzugt sind die physikalischen Treibmittel ausgewählt aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

In einer bevorzugten Ausführungsform wird als Treibmittelkomponente C) Ameisensäure sowie ein Pentanisomer oder ein Gemisch verschiedener Pentanisomeren, insbesondere ein Gemisch aus Cyclopentan und Isopentan, als Treibmittelkomponente C) eingesetzt.

Die Ameisensäure bzw. die Ameisensäure/Wasser - Mischung wird in einer bevorzugten Ausführungsform mit den weiteren Komponenten (A, D, E) der Polyolformulierung P) vor der optionalen Zugabe von physikalischen Treibmitteln und der Umsetzung mit der Isocyanatkomponente gemischt. Hierbei wird bevorzugt eine Konzentration von 0,5 - 6 Teile Ameisensäure in 100 Teilen Polyolformulierung P) eingestellt.

Die Treibmittelkomponente C) wird insgesamt in einer solchen Menge verwendet, wie sie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A.

Der Anteil an Ameisensäure an der gesamten Treibmittelkomponente C) enthält bevorzugt 20 - 100 Gew.-%, besonders bevorzugt 60 - 100 Gew.-%, und ganz besonders bevorzugt 80 - 95 Gew.-%, bezogen auf das Gesamtgewicht der Treibmittelkomponente C).

In einer weiteren bevorzugten Ausführungsform wird neben der Ameisensäure und gegebenenfalls Wasser als weitere Treibmittelkomponente ein physikalisches Treibmittel eingesetzt, welches im überkritischen oder nahekritischen Zustand vorliegt.

Dieses physikalische Treibmittel kann ausgewählt sein aus der Gruppe umfassend lineare, verzweigte oder cyclische C1- bis C6-Kohlenwasserstoffe, lineare, verzweigte oder cyclische C1-bis C6-Fluorkohlenwasserstoffe, $N_2$, $O_2$, Argon und/oder $CO_2$. Insbesondere bevorzugt ist $CO_2$ im überkritischen oder nahekritischen Zustand. Im Rahmen der vorliegenden Erfindung liegen nahekritische Bedingungen dann vor, wenn die folgende Bedingung erfüllt ist: $(T_c - T)/T \leq 0,4$ und/oder $(p_c - p)/p \leq 0,4$. Hierbei bedeuten T die im Verfahren herrschende Temperatur, Tc die kritische Temperatur des Treibmittels oder Treibmittelgemisches, p der im Verfahren herrschende Druck und pc der kritische Druck für das Treibmittel oder Treibmittelgemisch. Vorzugsweise liegen nahekritische Bedingungen vor, wenn gilt: $(T_c - T)/T \leq 0,3$ und/oder $(p_c - p)/p \leq 0,3$ und besonders bevorzugt $(T_c - T)/T \leq 0,2$ und/oder $(p_c - p)/p \leq 0,2$.

Besonders geeignete Bedingungen für die Durchführung des erfindungsgemäßen Verfahrens bei Verwendung von $CO_2$ sind solche Drücke und Temperaturen oberhalb des kritischen Punktes von $CO_2$, also $\geq 73,7$ bar und $\geq 30,9$ °C, bevorzugt zwischen 74 bar und 350 bar sowie zwischen 31 °C und 100 °C, besonders bevorzugt zwischen 75 bar und 200 bar sowie zwischen 32 °C und 60 °C. Wird überkritisches $CO_2$ eingesetzt, beträgt der Gehalt der Treibmittelkomponente C) beispielsweise $\geq 2$ Gew.-% bis $\leq 20$ Gew.-%, bezogen auf das Gesamtgewicht der Mischung. Bevorzugte Anteile sind $\geq 5$ Gew.-% bis $\leq 15$ Gew.-% und besonders bevorzugte Anteile sind $\geq 6$ Gew.-% bis $\leq 11$ Gew.-%.

Es kann auch eine Mischung aus überkritischem $CO_2$ und anderen physikalischen Treibmitteln, insbesondere ausgewählt aus den oben als bevorzugt genannten Treibmitteln eingesetzt werden. Werden weitere physikalische Treibmittel zugesetzt, enthalten diese in einer Ausführungsform bevorzugt mehr als 60 Gew.-% Kohlenstoffdioxid, besonders bevorzugt mehr als 75 Gew.-%.

Der Anteil der Treibmittelkomponente C) mindestens enthaltend Ameisensäure in der Mischung der Komponenten A), C), D) und E) beträgt in der Regel $\geq$ 1 Gew.-% bis $\leq$ 30 Gew.-%, bevorzugt $\geq$ 10 Gew.-% bis $\leq$ 20 Gew.-%.; der Anteil des Treibmittels in dem schaumbildenden Reaktionsgemisch R) beträgt 0,5 Gew.-% bis 15 Gew.-%, bevorzugt 5 Gew.-% bis 10 Gew.-%.

Die Komponente B) ist ein Polyisocyanat, also ein Isocyanat mit einer NCO-Funktionalität von > 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4-und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und folgende Strukturformel aufweisen: $C_{15}H_{10}N_2O_2$ $[C_8H_5NO]_n$, wobei n = ganze Zahl > 0, bevorzugt n = 1, 2, 3 und 4, ist. Höherkernige Homologe $C_{15}H_{10}N_2O_2$ $[C_8H_5NO]_m$, m = ganze Zahl $\geq$ 4) können ebenfalls im Gemisch aus organischen Polyisocyanaten a) enthalten sein. Als Isocyanatkomponente B) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A1) und A2) beschriebenen Polyolen.

Es ist möglich, dass das Isocyanat ein Präpolymer ist, welches erhältlich ist durch Reaktion eines Isocyanats mit einer NCO-Funktionalität von $\geq$ 2 und Polyolen mit einem Molekulargewicht von $\geq$ 62 g/mol bis $\leq$ 8000 g/mol und OH-Funktionalitäten von $\geq$ 1,5 bis $\leq$ 6.

Der NCO-Gehalt beträgt bevorzugt von $\geq$ 29,0 Gew.-% bis $\leq$ 32,0 Gew.%, und weist bevorzugt eine Viskosität bei 25 °C von $\geq$ 80 mPas bis $\leq$ 2000 mPas, besonders bevorzugt von $\geq$ 100 mPas bis $\leq$ 800 mPas auf (dynamische Viskosität bestimmt nach DIN 53019, bei 25°C).

Die Anzahl der NCO-Gruppen in der Polyisocyanatkomponente B) und die Anzahl der gegenüber Isocyanaten reaktiven Gruppen der Komponente A) können beispielsweise in einem Zahlenverhältnis von $\geq$ 50:100 bis $\leq$ 500:100 zueinander stehen. Zur Herstellung der PolyurethanHartschaumstoffe werden in der Regel die Komponenten A) und B) in solchen Mengen zur Umsetzung gebracht, dass die Isocyanat-Kennzahl der Rezeptur 80 - 150, bevorzugt 90 - 130, besonders bevorzugt 95 - 110 beträgt. In diesem Bereich werden bevorzugt Urethangruppen gebildet. In einer anderen bevorzugten Ausführungsform beträgt die Isocyanat-Kennzahl 150 - 400. In diesem Bereich weisen die Schaumstoffe einen hohen Anteil an Isocyanurat-Funktionen auf, welche z.B. eine inhärente Flammwidrigkeit der Schaumstoffe bewirken.

Gegenstand der Erfindung ist weiterhin ein Verfahren zur Herstellung von PUR/PIR - Hartschäumen, umfassend die Schritte

i) Herstellen des erfindungsgemäßen schaumbildenden Reaktionsgemisches R)

ii) Einbringen des Reaktionsgemisches R) in eine Form,

iii) Aufschäumenlassen des Reaktionsgemisches R) und

iv) Entformen des PUR/PIR-Hartschaums.

Im Schritt i) des erfindungsgemäßen Verfahrens wird das schaumbildende Reaktionsgemisch R) aus den Komponenten A) - E) hergestellt.

Hierfür kann die Mischung umfassend die Komponenten A), D), E) beispielsweise in einem Kessel zusammen mit der Ameisensäure bzw. dem Ameisensäure/Wasser - Gemisch vorgelegt werden, gegebenenfalls anschließend mit den weiteren Treibmittelkomponenten C) vermischt werden und mit dem Polyisocyanat B) versetzt werden. Die Vermischung der Komponenten kann auch in einem Mischkopf erfolgen.

Die Vermischung, insbesondere mit gegebenenfalls anwesenden physikalischen Treibmittelkomponenten C) sowie mit B), kann unter Druck erfolgen. In einer bevorzugten Ausführungsform werden die Komponenten A), D), E) und C) mit der Komponente B) in einem Hochdruck-Mischkopf vermischt.

Wird neben der Ameisensäure bzw. dem Ameisensäure/Wasser - Gemisch als weitere Treibmittelkomponente $CO_2$ im überkritischen Zustand eingesetzt, findet die Umsetzung der Komponenten bevorzugt unter für $CO_2$ überkritischen Bedingungen statt. In diesem Fall sind geeignete Drücke im Mischkopf und/oder in der Austragsleitung bzw. den Austragsleitungen für die Herstellung des Polyurethanschaums beispielsweise im Bereich von $\geq$ 73,7 bar bis $\leq$ 350 bar und vorzugsweise im Bereich von $\geq$ 75 bar bis $\leq$ 200 bar. Geeignete Temperaturen sind beispielsweise $\geq$ 30,9 °C bis $\leq$ 100 °C und vorzugsweise $\geq$ 32 °C bis $\leq$ 60 °C. Bei solchen Drücken können überkritische Bedingungen für das eingesetzte Treibmittel aufrechterhalten werden.

In einer weiteren Ausführungsform beträgt die Verweilzeit der Mischung im Mischkopf unter überkritischen Bedingungen des Treibmittels > 0 Sekunden bis $\leq$ 20 Sekunden, bevorzugt von > 0,1 Sekunden bis $\leq$ 10 Sekunden und besonders bevorzugt von $\geq$ 0,5 Sekunden bis $\leq$ 5 Sekunden. Dies führt dazu, dass die Mischung unter überkritischen Bedingungen polymerisieren kann. Die Verweilzeit kann durch das Volumen der Reaktionskammer (= Mischkammer und/oder Rohrleitungen), in der überkritische Bedingungen herrschen, geteilt durch das Volumen der Mischung, die in einer bestimmten Zeiteinheit gefördert wird, bestimmt werden.

In Schritt ii) des erfindungsgemäßen Verfahrens wird das erfindungsgemäße schaumbildende Reaktionsgemisch R) aus den Komponenten A) - E) in eine Form eingebracht.

In einer bevorzugten Ausführungsform handelt es sich bei der Form um eine geschlossene Form, wobei der Gegendruck in der Form während des Einspritzens 2 - 90 bar, bevorzugt 2 - 80 bar, besonders bevorzugt 5 - 40 bar beträgt.

Mögliche Ausführungsformen hierfür sind die folgenden: Der Gegendruck wird durch Beaufschlagung der Form mit Gas (Druckluft bzw. Stickstoff) entweder direkt und/oder durch eine schwimmende Dichtung, die den Druck-beaufschlagten Raum in Gas- und Reaktionsraum unterteilt, erreicht, und über ein Proportionalventil eingestellt, gehalten und letztlich entlastet.

In Schritt iii) des Verfahrens lässt man das Reaktionsgemisch aufschäumen.

Für den Fall, dass das Reaktionsgemisch in eine Form unter Gegendruck eingespritzt wurde, ist eine bevorzugte Ausführungsform des Schritts iii) die folgende:

Der Druck in der Form wird nach Ende Schritts ii) für einen Zeitraum 1, welcher bevorzugt 1 - 40 Sekunden, besonders bevorzugt 5 - 20 Sekunden und ganz besonders bevorzugt 8 - 17 Sekunden beträgt, konstant gehalten, wobei die Viskosität des Reaktionsgemisches zunächst ohne aufzuschäumen ansteigt. Es hat sich gezeigt, dass das Halten des Druckes während der bevorzugten Zeitdauer in besonders günstigen Viskositätsbereichen des Gemisches für diesen Reaktionsabschnitt resultiert. Nach Beendigung des Zeitraums 1 wird die Form entspannt. Die Entlastung des Drucks aus der Form erfolgt innerhalb eines Zeitraums 2, mit einer Druckentlastungsrate von 1 - 90 bar / s, bevorzugt 1 - 80 bar / s, besonders bevorzugt 2 - 70 bar / s. Die Entlastung kann insbesondere über ein Proportionalventil erfolgen. Während des Zeitraums 2 schäumt das Reaktionsgemisch auf. Eine zu schnelle Entlastung wirkt sich negativ auf die Zellstabilität, die zu langsame Entlastung negativ auf die Aufschäumreaktion aus.

In Schritt iv) des Verfahrens wird der PUR/PIR-Hartschaum entformt.

Eine besonders bevorzugte Ausführungsform des erfindungsgemäßen Verfahrens umfasst die Schritte:

i) Herstellen eines schaumbildenden Reaktionsgemisches R) aus

- einer Isocyanat-reaktiven Komponente A) enthaltend mindestens eine Polyolkomponente A1) ausgewählt aus der Gruppe bestehend aus Polyetherpolyolen, Polyesterpolyolen, Polycarbonatpolyolen, Polyether-Polycarbonatpolyolen und Polyetheresterpolyolen, welche eine OH - Funktionalität F von $\geq$ 2,5 aufweist,

- mindestens einer Polyisocyanatkomponente B),

- einer Treibmittelkomponente C),

- einer Katalysatorkomponente D) mindestens enthaltend eine katalytisch aktive Verbindung D1) mit Zerewitinoff-aktiven Wasserstoffen,

- Hilfs- und Zusatzstoffen E) umfassend keine oder mindestens eine zellöffnende Verbindung,

wobei der Anteil aller in der isocyanatreaktiven Komponente A) vorhandenen primären OH - Funktionen an der Gesamtzahl der endständigen OH - Funktionen in der Komponente A) mindestens 30 % beträgt, und die Treibmittelkomponente C) Ameisensäure enthält,

ii) Einbringen des schaumbildenden Reaktionsgemisches R) in eine geschlossene Form, wobei der Gegendruck in der Form während des Einspritzens 2 - 90 bar beträgt,

iii) Halten des Drucks in der Form für einen Zeitraum 1 von 1 - 40 s nach Ende des Schritts ii), und anschließendem Entlasten des Drucks aus der Form während eines Zeitraums 2 mit einer Druckentlastungsrate von 1 - 90 bar / s,

iv) Entformen des PUR/PIR - Hartschaums.

Ein weiterer Gegenstand der vorliegenden Erfindung ist ein PUR/PIR-Hartschaum, der durch das erfindungsgemäße Verfahren erhältlich ist oder erhalten wurde.

Durch das erfindungsgemäße Verfahren lassen sich PUR/PIR-Hartschäume mit einer Rohdichte von 25 - 300 kg/m$^3$, bevorzugt 30 - 200 kg/m$^3$, besonders bevorzugt 40 - 130 kg/m$^3$ mit gleichzeitig vielen offenen und besonders kleinen Zellen erhalten. So können harte Schäume mit einer Offenzelligkeit von > 70%, insbesondere > 90%, ganz besonders bevorzugt ≥ 94% hergestellt werden, bei denen die Zellen einen durchschnittlichen Durchmesser von 180 $\mu$m, insbesondere < 160 $\mu$m und ganz besonders bevorzugt < 100 $\mu$m zeigen. In einer besonders bevorzugten Ausführungsform haben die Zellen eine durchschnittliche Zellgröße < 90 $\mu$m und eine Offenzelligkeit > 94 %. Die Schäume weisen gute mechanische Eigenschaften, z.B. gute Druckfestigkeiten auf.

Aus den erfindungsgemäßen PUR/PIR-Schäumen lassen sich in bevorzugter Weise geschäumte Formkörper und Verbundsysteme enthaltend diese Formkörper herstellen. Die Verbundsysteme sind oft sowohl an der Ober- als auch an der Unterseite durch Dekorschichten begrenzt. Als Dekorschichten kommen unter anderem Metalle, Kunststoffe, Holz und Papier in Frage. Als Anwendungsgebiete solcher diskontinuierlich hergestellten PUR/PIR-Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren.

Der Einsatz von PUR/PIR-Schäumen auf diesen Gebieten ist dem Fachmann grundsätzlich bekannt und wurde schon vielfach beschrieben. Die erfindungsgemäßen PUR/PIR-Schäume eignen sich außerordentlich gut für diese Zwecke, da sie sich aufgrund ihrer Feinzelligkeit durch geringe Wärmeleitzahlen auszeichnen, die durch das Anlegen von Vakuum noch weiter gesteigert werden können.

Die Erfindung betrifft zudem einen Kühlschrank, einen Gefrierschrank oder eine Kühl-Gefrierkombination, umfassend einen erfindungsgemäß erhältlichen PUR/PIR-Hartschaum, wobei die bereitgestellte Form insbesondere ein Gehäuseteil des Kühlschranks, des Gefrierschranks oder der Kühl-Gefrierkombination ist. Die Erfindung soll anhand der nachfolgenden Beispiele und Vergleichsbeispiele näher erläutert werden.

## Beispiele

Die nachfolgenden Vergleichsbeispiele und Beispiele sollen die Erfindung näher erläutern, ohne sie jedoch einzuschränken.

## Verwendete Normen bzw. Messgeräte:

Bestimmung der Rohdichte: Schaumstoffe aus Kautschuk und Kunststoffen - Bestimmung der Rohdichte (ISO 845:2006); Deutsche Fassung EN ISO 845:2009

Bestimmung der Offenzelligkeit: - Bestimmung des Volumenanteils offener und geschlossener Zellen (ISO 4590:2002) Deutsche Fassung EN ISO 4590:2003

Bestimmung der Druckfestigkeit: Harte Schaumstoffe -Bestimmung der Druckeigenschaften (ISO 844:2014); Deutsche Fassung EN ISO 844:2014

Bestimmung der OH-Zahl: Die Bestimmung der Hydroxylzahl - Teil 2: Verfahren mit Katalysator gemäß DIN 53240-2, Stand November 2007

Bestimmung der Zellgröße: Lichtmikroskopische Auswertung via Lichtmikroskop VHX 5000; Der zu vermessende Probekörper wird an 3 unterschiedlichen Stellen jeweils über einen kreisförmigen Bereich mit einem Durchmesser von 5 mm untersucht. Hierbei wird die Auflösung so gewählt, dass der ausgewählte Bereich rund 100 Zellen erfasst. Danach werden 100 Zellen vermessen, der kleinste und größte Zelldurchmesser sowie der durchschnittliche Zelldurchmesser berechnet.

Die Angabe des Anteils an primären OH-Funktionen in [%] in Tabelle 1 bezieht sich auf den Anteil an primären OH-Funktionen an der Gesamtzahl der OH-Funktionen in der Mischung aus den in der Formulierung enthaltenden Polyolen.

Für die Herstellung der Schäume gemäß Beispielen 1 - 3 (erfindungsgemäß) sowie den Beispielen 4 - 6 (Vergleich) kamen folgende Stoffe zum Einsatz:

Polyol 1: Polyetherpolyol auf Basis Trimethylolpropan und Propylenoxid mit einer Hydroxylzahl von 800 mg KOH/g, einer Funktionalität von 3 und einer Viskosität von 6100 mPas bei 25 °C

Polyol 2: Polyetherpolyol auf Basis Trimethylolpropan und Ethylenoxid mit einer Hydroxylzahl von 550 mg KOH/g, einer Funktionalität von 3 und einer Viskosität von 505 mPas bei 25 °C

Polyol 3: Polyetherpolyol auf Basis Trimethylolpropan und Propylenoxid mit einer Hydroxylzahl von 550 mg KOH/g, einer Funktionalität von 3 und einer Viskosität von 1800 mPas bei 25 °C

Polyol 4: Polyetherpolyol auf Basis 1,2-Propandiol und Propylenoxid mit einer Hydroxylzahl von 56 mg KOH/g, einer Funktionalität von 2 und einer Viskosität von 310 mPas bei 25 °C

Polyol 5: Polyetherpolyol auf Basis 1,2 Propandiol und Propylenoxid mit einer Hydroxylzahl von 112 mg KOH/g, einer Funktionalität von 2 und einer Viskosität von 140 mPas bei 25 °C

Polyol 6: Polyetherpolyol auf Basis Glycerin und Propylenoxid mit einer Hydroxylzahl von 231 mg KOH/g, einer Funktionalität von 3 und einer Viskosität von 350 mPas bei 20 °C

Polyol 7: Polyetherpolyol auf Basis Glycerin und Saccharose und Propylenoxid mit einer Hydroxylzahl von 470 mg KOH/g und einer Funktionalität von 4,9

Polyol 8: Polyetherpolyol auf Basis Propylenglykol und Propylenoxid mit einer Hydroxylzahl von 260 mg KOH/g und einer Funktionalität von 2

B 8443: Schaumstabilisator (Evonik)

B 8870: Schaumstabilisator (Evonik)

Ortegol 500: Zellöffner (Evonik)

Ortegol 501: Zellöffner (Evonik)

Kaliumacetat/DEG: Katalysator, Kaliumacetat 25 % ig in Diethylenglykol (Covestro)

Dabco NE1070: Katalysator, 3-(Dimethylamino)propylharnstoff ca. 60%-ig in Diethylenglykol (Air Products)

Polycat 58: Katalysator, (Air Products)

Kaliumacetat/EG: Katalysator, Kaliumacetat 25 % ig in Ethylenglykol

Gemisch c-/i-Pentan: Gemisch aus Cyclopentan und iso-Pentan im Gewichtsverhältnis von 70:30, physikalisches Treibmittel

| Wasser: | Treibmittel |
| Ameisensäure: | Treibmittel, Ameisensäure 95 %ig |
| Isocyanat 1: | Gemisch aus monomerem und polymerem MDI mit einer Viskosität von ca. 290 m Pa*s bei 20 °C (Desmodur 44V20L, Covestro) |
| Isocyanat 2: | Gemisch aus monomerem und polymerem MDI mit einer Viskosität von ca. 1070 m Pa*s bei 20 °C (Desmodur 44V70L, Covestro) |

**Herstellung der Polyurethanfreischäume**

Zur Herstellung von Polyurethanfreischäumen im Labor wurden 200g der jeweiligen Polyolformulierung aus den in der nachfolgenden Tabelle 1 aufgeführten gegenüber Isocyanaten reaktiven Verbindungen, Stabilisatoren, Katalysatoren, Ameisensäure oder physikalische Treibmittel eingewogen und mittels Rührer homogenisiert. Die so erhaltene Isocyanat-reaktive Zusammensetzung wurde mit der entsprechenden Menge Isocyanat via Pendraulikrührer für 10 Sekunden bei 23 °C vermischt und in eine nach oben hin geöffnete Form (20 cm x 20 cm x 18 cm) ausgegossen. Die genauen Rezepturen inklusive der Ergebnisse entsprechender physikalischer Untersuchungen sind in Tabelle 1 zusammengefasst.

Tabelle 1

| Beispiel | | 1 | 2 | 3 | 4* | 5* | 6* |
|---|---|---|---|---|---|---|---|
| **Formulierung** | | | | | | | |
| Polyol 1 | | 13,00 | 13,00 | 13,00 | - | 13,00 | 13,00 |
| Polyol 2 | | 32,50 | 32,50 | 32,50 | - | 32,50 | - |
| Polyol 3 | | - | - | - | - | - | 32,50 |
| Polyol 4 | | 13,50 | 13,50 | 13,50 | 44,1 | 13,50 | 13,50 |
| Polyol 5 | | 9,50 | 9,50 | 9,50 | - | 9,50 | 9,50 |
| Polyol 6 | | 27,00 | 27,00 | 27,00 | - | 27,00 | 27,00 |
| Polyol 7 | | - | - | - | 44,1 | - | - |
| Polyol 8 | | | | | 9,15 | - | - |
| Wasser | | | | | 0,55 | | |
| B 8443 | | 1,50 | 1,50 | 1,50 | - | 1,50 | 1,50 |
| B 8870 | | - | - | - | 0,9 | | |
| Ortegol 500 | | 0,50 | 0,50 | - | - | 0,50 | 0,50 |
| Ortegol 501 | | - | - | - | 1,8 | 0,50 | - |
| Kaliumacetat/DEG | | 1,00 | 1,00 | - | - | 1,00 | 1,00 |
| Dabco NE1070 | | 0,65 | 0,65 | 0,65 | - | 0,65 | 0,65 |
| Kaliumacetat/EG | | - | - | - | 0,7 | - | - |
| Polycat 58 | | - | - | - | 0,5 | - | - |
| Ameisensäure | | 3,0 | 2,8 | 2,5 | - | - | - |
| Polyolfunktionalität | | 2,9 | 2,9 | 2,9 | 3,87 | - | - |
| Anteil primäre OH | [%] | 46,0 | 46,0 | 46,0 | 0,0 | 46,0 | 0,0 |
| Isocyanat1 | | 110,0 | 108,9 | 107,2 | | 92,60 | 92,60 |
| Isocyanat 2 | | - | - | - | 197 | - | - |
| n-Pentan | | - | - | - | | 6,70 | 6,70 |

(fortgesetzt)

| Beispiel | | 1 | 2 | 3 | 4* | 5* | 6* |
|---|---|---|---|---|---|---|---|
| Gemisch c-/i-Pentan | | - | - | - | 244 | | |
| **Reaktionszeiten Freischaum** | | | | | | | |
| Startzeit | [s] | 20 | 15 | 15 | 120 | 34 | 50 |
| Abbindezeit | [s] | 67 | 50 | 60 | 270 | 45 | 87 |
| Steigzeit | [s] | 90 | 55 | 80 | 360 | 55 | 90 |
| Klebfreizeit | [s] | 105 | 72 | 95 | 420 | 55 | 95 |
| Index | NCO/OH | 100 | 100 | 100 | 244 | 100 | 100 |
| *Vergleich | | | | | | | |

Die erhaltenen Freischäume wurden anschließend mit den oben angeführten Messmethoden charakterisiert. Ihre Eigenschaften sind in Tabelle 2 zusammengestellt.

Tabelle 2

| Beispiel | | 1 | 2 | 3 | 4* | 5* | 6* |
|---|---|---|---|---|---|---|---|
| Rohdichte | kg/m$^3$ | 62 | 66 | 70 | 63 | 63 | 63 |
| Druckfestigkeit bei 10 % Stauchung (parallel) | MPa | 0,38 | 0,42 | 0,42 | 0,41 | 0,41 | 0,41 |
| Druckfestigkeit bei 10 % Stauchung (quer) | MPa | 0,33 | 0,37 | 0,37 | 0,36 | 0,29 | 0,36 |
| Offenzelligkeit | % | 95 | 95 | 96 | 93 | 95,6 | 25,6 |
| Zellgröße Durchschnitt | $\mu$m | 49 | 64 | 67 | 137 | 150 | 126 |
| Zellgröße kleinste Zelle | $\mu$m | 8 | 5 | 25 | 21 | 43 | 73 |
| Zellgröße größte Zelle | $\mu$m | 95 | 154 | 129 | 299 | 217 | 174 |

Die Beispiele 1, 2 und 3 zeigen, dass mit der angeführten Rezeptur sehr feinzellige Hartschäume mit einem hohen Anteil an offenen Zellen hergestellt werden können.

Die durchschnittlichen Zellgrößen der erfindungsgemäßen Beispiele sind deutlich kleiner als bei den Vergleichsbeispielen, bei denen keine Ameisensäure verwendet wurde. Die Gegenüberstellung von Beispiel 1 und dem Vergleich Beispiel 4, welches dem Beispiel 1 aus der EP 2 072 548 entspricht, zeigt, dass die Zellgröße des Beispiel 1 mit einer durchschnittlichen Zellgröße von 49 $\mu$m um 64 % kleiner ist. Dies ist im Hinblick auf die Verwendung der Schäume als Kernmaterial für Vakuumisolationsanwendungen ein deutlicher Vorteil, da somit ein geringerer Lambda-Wert bei gleichem Druck erzielt werden kann.

Weiter zeigt Beispiel 3, dass auch mit einer Poylolformulierung ohne zellöffnende Substanzen (Ortegol) Schäume mit hoher Offenzelligkeit und feiner Zellstruktur erhalten werden können, wenn Ameisensäure als Treibmittel eingesetzt wird.

**Patentansprüche**

1.    Gegenstand der Erfindung ist eine Polyolformulierung P) geeignet zur Herstellung von offenzelligen PUR/PIR-Hartschäumen enthaltend

- eine Isocyanat-reaktive Komponente A) umfassend
mindestens eine Polyolkomponente A1) mit einer Funktionalität f von > 2,5, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,

- eine Katalysatorkomponente D) mindestens enthaltend eine katalytisch aktive Verbindung D1), welche über Zerewitinoff-aktive Wasserstoffe verfügt,

- Hilfs- und Zusatzstoffe E) umfassend keine oder mindestens eine zellöffnende Verbindung,

und

- eine Treibmittelkomponente C),

**dadurch gekennzeichnet, dass** der Anteil aller in der isocyanatreaktiven Komponente A) vorhandenen primären OH - Funktionen an der Gesamtzahl der endständigen OH - Funktionen in der Komponente A) mindestens 30 % beträgt, und dadurch, dass die Treibmittelkomponente C) Ameisensäure enthält.

2. Polyolformulierung gemäß Anspruch 1, **dadurch gekennzeichnet, dass** die Polyolkomponente A1) eine Hydroxylzahl von 280 - 600 mg KOH/g (DIN 53240-2 (2007)) aufweist.

3. Polyolformulierung P) gemäß Anspruch 1, **dadurch gekennzeichnet, dass** die isocyanatreaktive Komponente A) zu mindestens 65 Gew.-% aus der Polyolkomponente A1) besteht, die eine Hydroxylzahl zwischen 280 bis 600 mg KOH/g und eine Funktionalität von $\geq 2,8$ bis $\leq 6,0$ aufweist, und der Anteil an primären OH-Funktionen in der Komponente A) mindestens 35 % beträgt (bezogen auf alle endständigen OH-Funktionen in der Komponente A).

4. Polyolformulierung P) gemäß Anspruch 1, 2 oder 3, **dadurch gekennzeichnet, dass** die isocyanatreaktive Komponente A) zu mindestens 60 Gew.-% aus Polyetherpolyol besteht.

5. Polyolformulierung P) gemäß einem der vorangehenden Ansprüche, **dadurch gekennzeichnet, dass** kein Zellöffner auf Basis Polybutadien enthalten ist.

6. Polyolformulierung P) gemäß Anspruch 5, **dadurch gekennzeichnet, dass** auch keine anderen zellöffnenden Verbindungen enthalten sind.

7. Polyolformulierung P) gemäß einem der vorangehenden Ansprüche, **dadurch gekennzeichnet, dass** sie die katalytisch aktive Verbindung D1) in einer Menge von $\geq 0,01$ bis < 2 Gew.-%, bezogen auf das Gesamtgewicht der Komponente A), enthält.

8. Schaumbildendes Reaktionsgemisch R), umfassend

- eine Isocyanat-reaktive Komponente A) enthaltend mindestens eine Polyolkomponente A1) ausgewählt aus der Gruppe bestehend aus Polyetherpolyolen, Polyesterpolyolen, Polycarbonatpolyolen, Polyether-Polycarbonatpolyolen und Polyetheresterpolyolen, welche eine OH - Funktionalität F von $\geq 2,5$ aufweist,
- mindestens eine Polyisocyanatkomponente B),
- eine Treibmittelkomponente C),
- eine Katalysatorkomponente D) mindestens enthaltend eine katalytisch aktive Verbindung D1) mit Zerewitinoff-aktiven Wasserstoffen,
- Hilfs- und Zusatzstoffe E) umfassend keine oder mindestens eine zellöffnende Verbindung,

wobei der Anteil aller in der isocyanatreaktiven Komponente A) vorhandenen primären OH - Funktionen an der Gesamtzahl der endständigen OH - Funktionen in der Komponente A) mindestens 30 % beträgt, und die Treibmittelkomponente C) Ameisensäure enthält.

9. Schaumbildendes Reaktionsgemisch R) gemäß Anspruch 8, wobei der Gehalt an Ameisensäure 0,5 - 6 Gew.-%, bezogen auf die Gesamtmenge an Verbindungen mit gegenüber Isocyanatgruppen reaktiven Wasserstoffatomen in dem schaumbildenden Reaktionsgemisch R), beträgt.

10. Verfahren zur Herstellung von PUR/PIR-Hartschaumstoffen, umfassend die Schritte

i) Herstellen des erfindungsgemäßen Reaktionsgemisches R) gemäß Anspruch 8 oder 9,
ii) Einbringen des schaumbildenden Reaktionsgemisches R) in eine Form,
iii) Aufschäumenlassen des Reaktionsgemisches R) und
iv) Entformen des PUR/PIR-Hartschaums.

**11.** Verfahren gemäß Anspruch 10, wobei Schritt i) in einem Mischkopf oder Hochdruckmischkopf erfolgt.

**12.** Verfahren gemäß einem der Ansprüche 10 - 11, **dadurch gekennzeichnet, dass** in Schritt ii) das schaumbildende Reaktionsgemisch R) in eine geschlossene Form eingebracht wird, wobei der Gegendruck in der Form während des Einspritzens 2 - 90 bar beträgt.

**13.** Verfahren gemäß Anspruch 10, **dadurch gekennzeichnet, dass**

in Schritt ii) das schaumbildende Reaktionsgemisch R) in eine geschlossene Form eingebracht wird, wobei der Gegendruck in der Form während des Einspritzens 2 - 90 bar beträgt, und
in Schritt iii) der Druck in der Form für einen Zeitraum 1 von 1 - 40 s nach Ende des Schritts ii) gehalten wird, und anschließend der Druck aus der Form während eines Zeitraums 2 mit einer Druckentlastungsrate von 1 - 90 bar / s entlastet wird.

**14.** Offenzelliger PUR/PIR-Hartschaum, der durch das Verfahren gemäß einem der Ansprüche 11 - 13 erhältlich ist.

**15.** Kühlschrank, Gefrierschrank oder eine Kühl-Gefrierkombination, enthaltend einen PUR/PIR-Hartschaum gemäß Anspruch 14.

Europäisches Patentamt
European Patent Office
Office européen des brevets

# EUROPÄISCHER RECHERCHENBERICHT

**Nummer der Anmeldung**

EP 17 17 0955

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2011 050013 A1 (BAYER MATERIALSCIENCE AG [DE]) 31. Oktober 2012 (2012-10-31) * Formel (1); Ansprüche 8,9; Beispiele 1-3; Verbindung Tween 80 * ----- | 1-15 | INV. C08G18/48 B29C44/10 C08G18/66 C08G18/76 C08J9/12 C08J9/14 C08G18/32 |
| Y | US 4 699 932 A (FUZESI STEPHEN [US] ET AL) 13. Oktober 1987 (1987-10-13) * Spalte.8, letzte Zeile; Spalte 8; Verbindungen Poly-G-70-460 und Foams 1-10 * ----- | 1-15 | |
| Y | WO 2015/024820 A1 (BASF SE [DE]) 26. Februar 2015 (2015-02-26) * Seite 14, Zeilen 9-30; Anspruch 1 * ----- | 1-15 | |

**RECHERCHIERTE SACHGEBIETE (IPC)**

C08G
B29C
C08J

Der vorliegende Recherchenbericht wurde für alle Patentansprüche erstellt

| Recherchenort | Abschlußdatum der Recherche | Prüfer |
|---|---|---|
| München | 6. November 2017 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 3 372 625 A1

## ANHANG ZUM EUROPÄISCHEN RECHERCHENBERICHT
## ÜBER DIE EUROPÄISCHE PATENTANMELDUNG NR.

EP 17 17 0955

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2017

| Im Recherchenbericht angeführtes Patentdokument | Datum der Veröffentlichung | Mitglied(er) der Patentfamilie | Datum der Veröffentlichung |
|---|---|---|---|
| DE 102011050013 A1 | 31-10-2012 | CA 2834321 A1<br>CN 103492468 A<br>DE 102011050013 A1<br>EP 2702096 A2<br>JP 2014512446 A<br>KR 20140025414 A<br>RU 2013152785 A<br>US 2014045960 A1<br>WO 2012146568 A2 | 01-11-2012<br>01-01-2014<br>31-10-2012<br>05-03-2014<br>22-05-2014<br>04-03-2014<br>10-06-2015<br>13-02-2014<br>01-11-2012 |
| US 4699932 A | 13-10-1987 | JP S6392630 A<br>US 4699932 A | 23-04-1988<br>13-10-1987 |
| WO 2015024820 A1 | 26-02-2015 | CN 105658692 A<br>EP 3036267 A1<br>JP 2016528366 A<br>KR 20160045771 A<br>RU 2016109922 A<br>WO 2015024820 A1 | 08-06-2016<br>29-06-2016<br>15-09-2016<br>27-04-2016<br>26-09-2017<br>26-02-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5350777 A
- EP 498628 A
- DE 4303809 A
- US 5250579 A
- US 5312846 A
- US 5889067 A
- EP 905159 A
- EP 905158 A
- EP 2072548 A
- WO 200198389 A1
- WO 2011054868 A
- WO 2011054873 A
- WO 2015109488 A
- EP 2910585 A
- EP 1359177 A
- WO 2010043624 A
- EP 1923417 A

**In der Beschreibung aufgeführte Nicht-Patentliteratur**

- Chemistry and Technology of Polyols for Polyurethanes. **IONESCU.** Oligo-Polyols for Elastic Polyurethanes. Rapra Technology Limited, 2005, 55 ff
- Polyester Polyols for Elastic Polyurethanes. 263 ff
- Polyether Polyols for Rigid Polyurethane Foams. 321 ff
- Polyester Polyols for Rigid Polyurethane Foams. 419 ff
- Kunststoff-Handbuch. Polyurethane. Carl Hanser Verlag, 1993, vol. 7, 104-127